# EUROPÄISCHE PATENTSCHRIFT

(11) **EP 1 521 697 B1**
(45) Veröffentlichungstag und Bekanntmachung des Hinweises auf die Patenterteilung: **19.12.2012**
(21) Anmeldenummer: 03738076.3
(22) Anmeldetag: 20.06.2003
(51) Int. Cl.: B60T 8/88, B60T 8/34, B60T 8/94, B60G 17/0185, B60G 17/0195, B60T 8/96, B62D 5/00, B60T 8/40

(54) **VERFAHREN ZUM SICHERSTELLEN ODER AUFRECHTERHALTEN DER FUNKTION EINES KOMPLEXEN SICHERHEITSKRITISCHEN GESAMTSYSTEMS**
METHOD FOR GUARANTEEING OR MAINTAINING THE FUNCTION OF A COMPLEX SAFETY-CRITICAL INTEGRAL SYSTEM
PROCEDE PERMETTANT DE GARANTIR OU DE CONSERVER DU FONCTIONNEMENT D'UN SYSTEME GLOBAL VITAL COMPLEXE

(30) Priorität: 05.07.2002 DE 10230580; 05.07.2002 DE 10230578
(43) Veröffentlichungstag der Anmeldung: 13.04.2005
(73) Patentinhaber: Continental Teves AG & Co. oHG, 60488 Frankfurt am Main (DE)
(72) Erfinder: FACHINGER, Georg, 65549 Limburg (Lahn) (DE); KASCHA, Reinhold, 63674 Altenstadt (DE)
(86) Internationale Anmeldenummer: PCT/EP2003/006546
(87) Internationale Veröffentlichungsnummer: WO 2004/005096

(56) Entgegenhaltungen:
- EP-A- 0 754 611
- EP-A- 1 088 728
- WO-A-02/42137
- DE-A- 10 036 287
- DE-A- 19 753 907
- US-A- 5 236 254

## Beschreibung

Die Erfindung bezieht sich auf ein Verfahren zum Sicherstellen oder Aufrechterhalten der Funktion eines komplexen sicherheitskritischen Gesamtsystems, wie eines Kraftfahrzeugregelungssystems, z.B. eines elektrischen, elektrohydraulischen oder elektromechanischen Bremsensystems (Brake-by-Wire), eines Lenkungssystems (Steering-by-Wire) etc., beim Auftreten von Fehlern oder Fehlfunktionen.

Sicherheitsrelevante Systeme erfordern Maßnahmen, die auch bei Funktionsfehlern und beim Ausfall einzelner Systemkomponenten eine definierte Funktionsweise sicherstellen. Handelt es sich um ein "Add-On"-System, bei dem im Fehlerfall ein Rückgriff auf ein Basissystem, z.B. ein Rückfall auf ein hydraulisches Basissystem, möglich ist, wie dies bei bekannten und gebräuchlichen ABS-, TCS-, ESP-Systemen der Fall ist, wird beim Auftreten eines Fehlers durch Ausschalten der Elektronik die gesamte Regelung abgeschaltet. Schon ein relativ unbedeutender Fehler führt daher bei einer solchen Auslegung des Gesamtsystems zu einem Totalausfall des Add-On-Systems oder der gesamten Regelung.

Eine derartige Systemauslegung ist aus Sicherheitsgründen bei Nicht-Add-On-Systemen, zu denen diverse "By-Wire"-Systeme (Brake-by-Wire, Steering-by-Wire) zählen, nicht akzeptabel, da eine hydraulische Rückfallebene nicht immer zur Verfügung steht. Eine Abschaltung der Elektronik würde das gesamte System oder wesentliche Teile außer Betrieb setzen. Hier gilt es, die Funktion des Systems in Form eines geeigneten Notlaufs auch nach dem Auftreten von Fehlern noch aufrechtzuerhalten.

Die Auslegung eines solchen Systems muss den Ergebnissen der Fehlerquellenanalyse Rechnung tragen. Für jede einzelne Komponente können neben dem normalen Arbeitsmodus auch Notlaufmodi definiert werden. Es wird eine Entscheidungsmatrix erstellt, in der den zu erwartenden Fehlern und Fehlerkombinationen bestimmte Betriebsmodi oder Notlaufmodi zugeordnet werden.

Eine Erfassung und Berücksichtigung aller möglichen Fehler und Fehlerkombinationen ist wegen der Vielzahl der Fehlerquellen nicht realisierbar. Bei den bekannten Systemen der hier in Rede stehenden Art wird daher die Fehlerquellenanalyse und die Zuordnung bestimmter Notlaufmodi i.w. nur für den Erstfehlerfall durchgeführt. Die Berücksichtigung von Zweitfehlern oder Fehlerkombinationen bleibt auf relativ wenige Einzelfälle beschränkt.

Ebenso wenig, wie die Analyse der unzähligen Fehlerkombinationen durchgeführt werden kann, kann auch die Fehlerbehandlung (Generierung der System-Notlaufebenen) weder in der Software noch in der Hardware für jede Fehlerkombination einzeln umgesetzt werden. Bisher beschränkt man sich deshalb auf die Behandlung der Fehlerbilder, die als "am wahrscheinlichsten" angesehen werden und legt das Gesamtsystem in allen anderen Fällen still. Diese Auslegung kann z.B. bei einem Brake-by-wire System zu dem vollständigen Verlust der Bremswirkung, bei einem Steering-by-Wire-System zu dem Verlust der Lenkbarkeit führen.

Aus der DE 197 53 907 A1 ist ein komplexes Verbundsystem zur Regelung des Fahrverhaltens eines Kraftfahrzeuges bekannt, bei dem eine Rangordnung der einzelnen Regelungsfunktionen, eine hierarchische Gliederung (Rangfolge) der Fehlerarten sowie eine entsprechende Gliederung der Kategorien (Sensorik, Aktuatorik, Hydraulik) festgelegt und nach Maßgabe dieser Einteilung der möglichen Fehler ein möglichst optimales (eingeschränktes) System aufrechterhalten wird, ohne dass dafür jeder einzelne Fehler durch das Betriebsprogramm abgearbeitet werden muss. Durch diese Vorgehensweise kann die Fehlerbehandlung deutlich vereinfacht werden.

Die EP 1 088 728 A2 beschreibt ebenfalls eine optimierte Fehlerbehandlung in einer Regelungsvorrichtung für Kraftfahrzeugbremsen. Bei der beschriebenen Fehlerbehandlung werden in Abhängigkeit der Fehlerquellen die betriebstüchtigen Bremsen bestimmt und entsprechende Betriebsmodi für die einzelnen Bremsen festgelegt, welche eine Aufrechterhaltung oder einen eingeschränkten Betrieb zulassen. Nach Maßgabe eines Steuerdatenkennfelds wird bestimmt, ob der Betrieb einer jeden der funktionstüchtigen Betriebsbremsen und der Feststellbremsen zugelassen oder verhindert werden sollte.

Der Erfindung liegt nun die Aufgabe zugrunde, ein Verfahren zu entwickeln, das es ermöglicht, die Funktion oder Notfunktion eines komplexen sicherheitskritischen Systems beim Auftreten eines beliebigen Fehlers, einer beliebigen Anzahl von Fehlern oder Fehlerkombinationen aufrecht zu erhalten.

Es hat sich herausgestellt, dass diese Aufgabe durch das im Anspruch 1 beschriebene Verfahren gelöst werden kann.
Die Erfindung beruht im Prinzip auf der Erkenntnis, dass die Ergebnisse der Erstfehleranalyse und die daraus resultierende Auslegung eines komplexen sicherheitsrelevanten Systems bisher ungenutzte Informationen enthalten, die ausgewertet werden können, um auch beim gleichzeitigen Auftreten von mehreren Fehlern oder Fehlerkombinationen die Funktion oder Notfunktion des Systems aufrecht erhalten zu können - soweit es die Fehler zulassen. Dadurch wird es möglich, die Verfügbarkeit und die Sicherheit eines sicherheitskritischen Systems entscheidend zu erhöhen.

Nach dem erfindungsgemäßen Verfahren wird für die Betriebsmodi der einzelnen Systemkomponenten eine Rangfolge vorgegeben, die vorzugsweise von einem Normalmodus oder Arbeitsmodus, der bei fehlerfreiem System vorgegeben wird, bis zu mehreren Notlaufmodi, die je nach Art der aufgetretenen Fehler noch zulässig sind, und einem Ausfallmodus (Ausfall der Systemkomponente) reicht.

Beim Auftreten von Fehlern im Gesamtsystem werden in einem ersten Berechnungsschritt unter der Annahme, dass alle Betriebsmodi verfügbar sind, sämtliche Fehlerquellen analysiert und sämtliche von den aufgetretenen Fehlern betroffenen Betriebsmodi gesperrt; in einem nächsten Berechnungsschritt werden dann auf Basis der Betriebsmodi, die von den aufgetretenen Fehlern nicht betroffenen sind, nach den Vorgaben des Auswahlsystems die Betriebsmodi der einzelnen Systemkomponenten, welche die Funktion des Gesamtsystems aufrechterhalten, bestimmt und vorgegeben.

Weiterhin wird das Auswahlsystem beispielsweise in Form einer Entscheidungsmatrix oder eines Regelwerks ausgebildet, in der bzw. in dem festgelegt wird, welche Betriebsmodi für die einzelnen Systemkomponenten in Abhängigkeit von der Art und/oder der Verteilung Betriebsmodi, die nach Auswertung der Fehlerquellenanalyse noch zulässig sind, vorgegeben werden.

Das erfindungsgemäße Verfahren lässt sich mit großem Vorteil zur Erhöhung der Betriebssicherheit eines komplexen Bremskraftregelungssystems, wie eines Brake-by-Wire-Systems (EHB, EMB), bei dem jedem Fahrzeugrad ein Radbremskraftregler zugeordnet ist, verwenden. Dieses spezielle Beispiel dient im Folgenden zur näheren Erläuterung der Erfindung. In diesem Fall werden die Radbremskraftregler der einzelnen Räder als voneinander unabhängige Systemkomponenten ausgelegt, denen Betriebsmodi in vorgegebener Rangfolge zugeordnet werden, wobei als Auswahlsystem zur Festlegung der Betriebsmodi der einzelnen Radbremskraftregler in Abhängigkeit von dem Ergebnis der Fehlerquellenanalyse ein Regelwerk verwendet wird, das auf der Bildung und Auswahl von Radpaaren aus jeweils einem rechten und einem linken Fahrzeugrad beruht.

Den Systemkomponenten werden mindestens zwei, in der Regel vier, fünf oder noch mehr Betriebsmodi in einer vorgegebenen Rangfolge zugeordnet.

Die Rangfolge der Betriebsmodi der einzelnen Radbremskraftregler, d.h. die Priorität, nach der die Betriebsmodi ausgewählt werden, wird im Hinblick auf das Erzielen einer hohen oder maximalen Regelgüte festgelegt, wobei grundsätzlich dem Betriebsmodus, der eine höhere Regelgüte erwarten lässt, ein höherer Rang, d.h. eine höhere Priorität bei der Auswahl der Betriebsmodi, die zum Einsatz kommen, eingeräumt wird.

Als Kriterium für eine hohe Regelgüte wird z.B. eine hohe Verzögerung des Fahrzeugs bei gleichzeitig hoher Dynamik und/oder Kontrollierbarkeit des Bremseneingriffs angesehen.

Nach einem besonders vorteilhaften Ausführungsbeispiel des erfindungsgemäßen Verfahrens wird eine Rangfolge der Radpaare, die bei einem Bremsvorgang zum Einsatz kommen, festgelegt, wobei dem Radpaar, das beim Bremsen vergleichsweise geringe Giermomente und/oder eine hohe Stabilität des des Fahrzeugs erwarten lässt, ein höherer Rang, d.h. eine höhere Priorität bei der Auswahl des Radpaares, das zum Einsatz kommt, eingeräumt wird. Dabei wird dem Radpaar "Vorderachse" lich ein höherer Rang als den beiden diagonalen Radpaaren, die im Rang gleich sind, eingeräumt, weil bekanntlich aus fahrzeugdynamischen Gründen der Beitrag der Vorderachse zum Abbremsvorgang vergleichsweise hoch ist.

Bei der Auswahl der Betriebsmodi und der Radpaare, die zum Einsatz kommen, wird nach einem weiteren Ausführungsbeispiel des erfindungsgemäßen Verfahrens in einem ersten Schritt das ranghöchste Radpaar ermittelt, bei dem für die beiden zugehörigen Radbremskraftregler ein bestimmter, vorgegebener Betriebsmodus, vorzugsweise der Betriebsmodus mit der höchsten Priorität, zur Verfügung steht.

In einem zweiten Schritt wird dann ein Betriebsmodus ermittelt, der den beiden Radbremskraftreglern des zweiten Radpaares noch zur Verfügung steht, wobei wiederum im ersten Durchlauf des Auswahlprozesses der Betriebsmodus mit dem höchsten Rang bevorzugt wird.

Ein wichtiges Ausführungsbeispiel der Erfindung besteht nun darin, dass die in dem ersten und in dem zweiten Schritt ausgewählten Betriebsmodi den einzelnen Radbremskraftregler nur dann zugeordnet werden, wenn bestimmte, vorgegebene Zusatzbedingungen, erfüllt sind, die z.B. die Zulässigkeit der Kombination bestimmter Betriebsmodi, die Verfügbarkeit von Regelungsfunktionen etc. beschreiben.

Bei Nichterfüllung der Zusatzbedingungen wird zweckmäßiger Weise die Auswahl der Betriebsmodi und/oder der Radpaare, die zum Einsatz kommen, auf Basis von Betriebsmodi und/oder Radpaaren geringeren Ranges wiederholt, bis eine Kombination von Betriebsmodi ermittelt wird, für die die Zusatzbedingungen erfüllt sind.

Erfindungsgemäß wird schließlich nach wiederholter Auswahl und Zuordnung von Betriebsmodi und/oder Radpaaren sowie Kombination der zur Verfügung stehenden Betriebsmodi bei andauernder Nichterfüllung der Zusatzbedingungen eine Notfallberechnung und Festlegung der Betriebsmodi nach vorgegeben Regeln durchgeführt.

Weitere Vorteile und Anwendungsmöglichkeiten der Erfindung gehen aus der folgenden Beschreibung von Einzelheiten an Hand der beigefügten Abbildungen hervor.

Es zeigen:
- Fig. 1: schematisch ein Beispiel für die einzelnen Schritte des erfindungsgemäßen Verfahrens, die zur Auswahl von bestimmten Betriebsmodi beim Auftreten eines Fehlers oder einer Fehlerkombination führen,
- Fig. 2: in gleicher Darstellungsweise wie Fig. 1 die Reaktion auf das Auftreten eines anderen Fehlers oder anderen Fehlerkombination,
- Fig. 3: in gleicher Darstellungsweise wie Fig. 1 und 2 die Reaktion auf das gleichzeitige Auftreten der Fehler nach Fig. 1 und 2,
- Fig. 4: in schematisch vereinfachter Darstellung den hydraulischen Schaltplan und die wesentlichen Komponenten eines geregelten elektrohydraulischen Bremsensystems (EHB) als Anwendungsbeispiel für die Erfindung,
- Fig. 5: in Gestalt eines Nassi-Shneiderman-Ablaufdiagramms ein Beispiel für die Arbeitsweise eines Auswahlsystems zur Bestimmung der Betriebsmodi der einzelnen Systemkomponenten für das Bremsensystem nach Fig. 4,
- Fig. 6: in gleicher Darstellungsweise wie Fig. 1-3 ein Beispiel für die Verknüpfung und Auswertung der Bremskraftregler-Betriebsmodi des Bremsensystems nach Fig. 4,
- Fig. 7: eine Variante der Darstellung und der Situation des Ausführungsbeispiels nach Fig. 6 und
- Fig. 8: als weitere Variante des Beispiels nach Fig. 6 eine Situation, bei der die Fehler nach Fig. 6 und 7 gleichzeitig auftreten.

Im Folgenden wird als Ausführungsbeispiel des erfindungsgemäßen Verfahrens ein auf den Ergebnissen einer Erstfehleranalyse basierendes Verfahren beschrieben, das für komplexe sicherheitskritische Systeme unterschiedlicher Art geeignet ist und das grundsätzlich die Möglichkeit bietet, die (Not-)Funktion des Systems bei theoretisch beliebig hoher Anzahl von Fehlern oder Fehlerkombinationen aufrecht zu erhalten. Dieses in jeder Techniksparte anwendbare Verfahren erhöht erheblich die Systemverfügbarkeit und gewährleistet letztendlich eine hohe Systemsicherheit im Gegensatz zu den bekannten und heute gängigen Verfahren, die sich auf die Auswertung und die "angemessene" Reaktion auf die als wahrscheinlich angesehenen Fehler und Fehlerbilder beschränken. Bei allen anderen Fehlern oder Fehlerkombinationen werden das System teilweise oder vollständig abgeschaltet und damit die Funktionen häufig in zu hohem Maße eingeschränkt; auch ein relativ unbedeutender, jedoch nicht als "wahrscheinlich" eingestufter, d.h. nicht vorausgesehener Fehler führt zu totalem oder weitgehendem Ausschalten von Funktionen.

Die während des Systemdesigns durchgeführte Erstfehleranalyse liefert folgende Ergebnisse:
- Die Unterteilung des Systems in voneinander unabhängige Systemkomponenten;
- die Definition der Betriebsmodi für jede einzelne Systemkomponente (neben "verfügbar/nicht verfügbar" können diverse Notlaufmodi definiert werden);
- Es wird ein Auswahlsystem, z.B. in Form einer Entscheidungsmatrix, gebildet, mit dem festgestellt wird, welche Betriebsmodi in Abhängigkeit von dem erkannten "Einzelfehler" für alle Systemkomponenten zulässig sind.

Das erfindungsgemäße Verfahren nutzt diese Information weiterhin und wertet diese zusätzlich, aber dynamisch aus, indem
- in jedem Berechnungsschritt zunächst davon ausgegangen wird, dass für jede Systemkomponente alle für diese Komponente infrage kommenden Betriebsmodi verfügbar sind (Annahme: System ist fehlerfrei)
- in jedem Berechnungsschritt sämtliche Fehlerquellen analysiert werden; beim Auftreten eines Fehlers werden den betroffenen Systemkomponenten alle korrelierten Betriebsmodi aberkannt. Somit wird eine systemweite Komponentendegradation erreicht, die im Prinzip auf einer Fehlersuperposition beruht, wobei die Anzahl an aufgetretenen Fehlern oder Fehlerkombinationen keine Rolle spielt.
- Aus den nach der Fehlerquellenanalyse für die Systemkomponenten noch verfügbaren Betriebsmodi werden schließlich nach Vorgaben eines Modus-Auswahlsystems diejenigen Betriebsmodi ausgewählt und zum Einsatz gebracht, die unter den gegebenen Bedingungen das optimale Verhalten des Gesamtsystems garantieren.

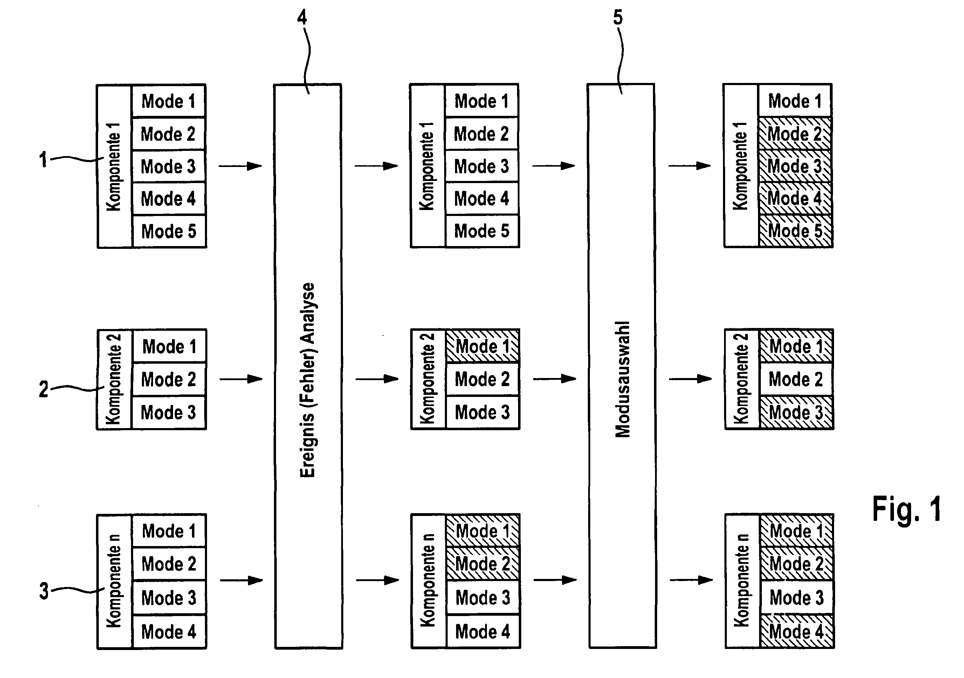

Das Ausführungsbeispiel nach Fig. 1 veranschaulicht die prinzipielle Funktionsweise des erfindungsgemäßen Verfahrens. Das sicherheitskritische System ist in dem dargestellten Beispiel in die Systemkomponenten "Komponente 1", "Komponente 2", "Komponente n" unterteilt. Die bei fehlerfreiem System verfügbaren Betriebsmodi (oder "Mode") der Systemkomponente 1 (Bezugszeichen 1) sind in Fig. 1 mit "Mode 1 - 5", die Betriebsmodi der Systemkomponente 2 (2) mit "Mode 1 - 3" und die Betriebsmodi der Systemkomponente n (3) mit "Mode 1 - 4" bezeichnet.

Es ist im Beispiel nach Fig. 1 ein Fehler aufgetreten, der nach einer Fehlerquellenanalyse, die in Fig. 1 durch eine Aktion oder Ereignisanalyse 4 symbolisiert ist, dazu führt, dass der Betriebsmodus 1 (kurz: "Mode" oder Modus 1) der Systemkomponente 2 und die Modi 1 und 2 der Systemkomponente n nicht mehr zur Verfügung stehen; in der mittleren Spalte der Fig. 1 sind diejenigen Modi der Systemkomponenten "Komponente 1", "Komponente 2", "Komponente n" markiert, die als Ergebnis der Fehler- und Ereignisanalyse in dem Schritt 4 von den aufgetretenen Fehlern betroffen sind.

In einem anschließenden Auswahlverfahren, symbolisiert durch die "Modusauswahl" 5, werden nun nach bestimmten Vorgaben, d.h. nach den in dem Modus-Auswahlsystem 5 definierten Regeln, auf Basis der in Anbetracht der aufgetretenen Fehler oder Fehlerkombinationen noch verfügbaren Betriebsmodi diejenigen Betriebsmodi der einzelnen Betriebskomponenten 1-3 ("Komponente 1", "Komponente 2", "Komponente n") bestimmt oder ausgewählt, die im Gesamtsystem weiterhin aufrecht erhalten werden sollen.

Das Modus-Auswahlsystem 5 kann z.B. durch eine Entscheidungsmatrix verkörpert werden.

Im Beispiel nach Fig. 1 wird ein optimales Verhalten des Gesamtsystems unter Berücksichtigung der erkannten Fehler oder Fehlerkombinationen durch Aufrechterhaltung des Betriebsmodus 1 der Systemkomponente 1 (1), durch Aufrechterhaltung des Betriebsmodus 2 der Systemkomponente 2 (2) und durch Aufrechterhaltung des Betriebsmodus 3 der Systemkomponente n (3) erreicht.

Das in dem hier beschriebenen Ausführungsbeispiel verwendete Betriebsmodus-Auswahlverfahren 5 arbeitet nach einem sogenannten "Best Of Component"-Prinzip; es wird grundsätzlich derjenige Betriebsmodus einer Systemkomponente ausgewählt oder aktiviert, welcher die anstehende Aufgabe am besten erfüllen kann. In der Praxis kommen jedoch noch andere systemspezifische Auswahlverfahren zum Einsatz, z.B. ein Auswahlverfahren nach dem Prinzip "Best For System", bei dem grundsätzlich die für die Gesamtfunktion des Systems oder für die Betriebssicherheit des Systems günstigste Reaktion auf die erkannten Fehler ausgewählt wird.

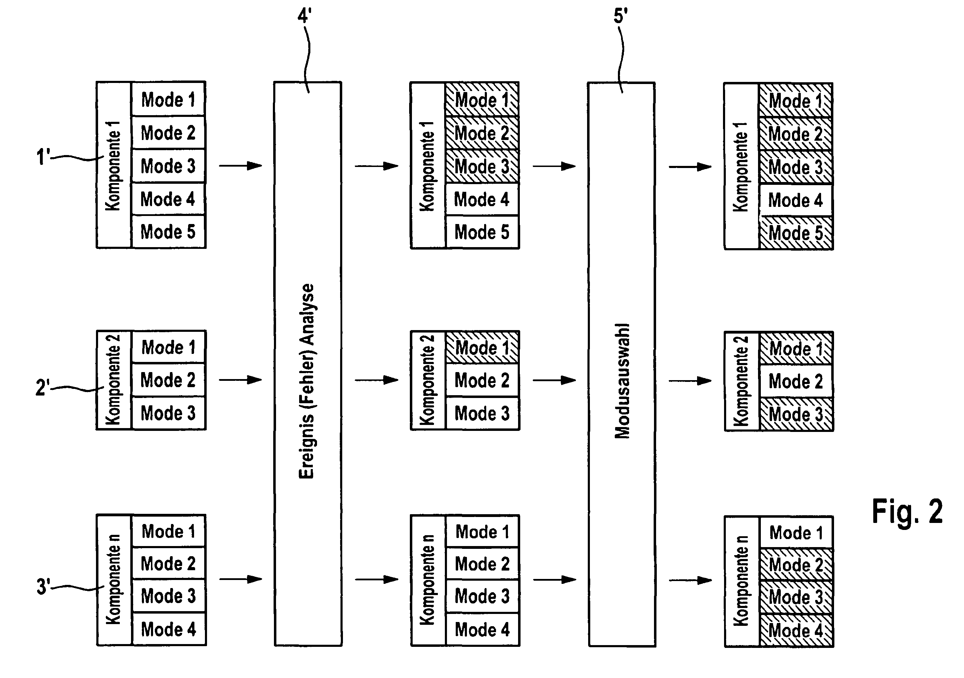

In einem zweiten Ausführungsbeispiel, auf das sich Fig. 2 bezieht, ist ein anderer Fehler aufgetreten, der die Betriebsmodi 1-3 der Systemkomponente 1 (1') und den Betriebsmodus 1 der Systemkomponente 2 (2') gefährdet oder ausschließt. Als Ergebnis des Modusauswahlverfahrens im Schritt 5' werden nur noch der Betriebsmodus 4 der Systemkomponente 1 (1'), der Betriebsmodus 2 der Systemkomponente 2 (2') und der Betriebsmodus 1 der Systemkomponente n (3') zugelassen.

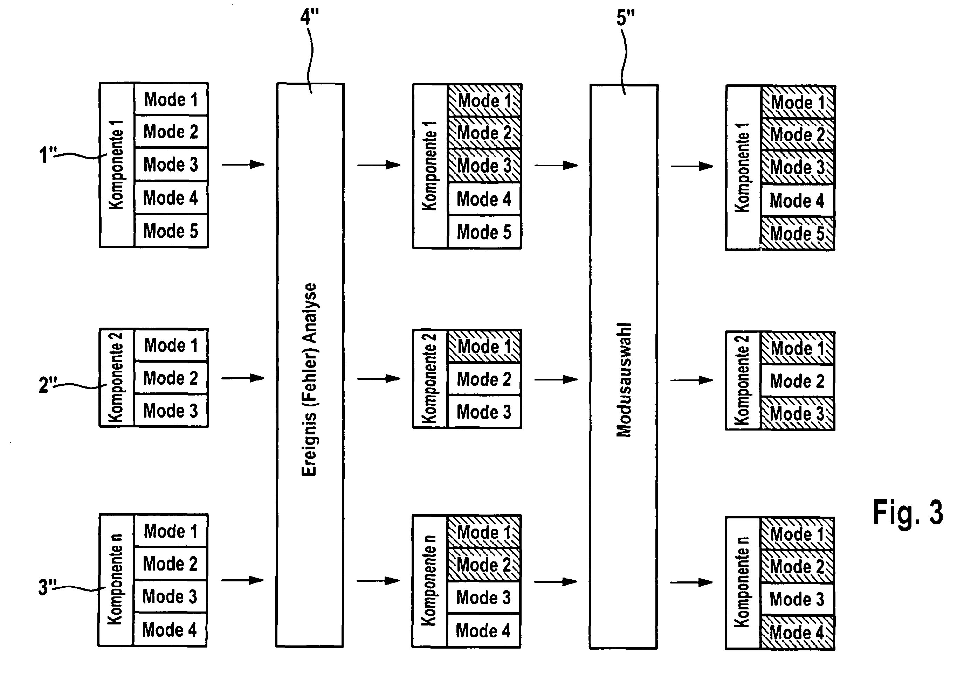

Im Beispiel nach Fig. 3 sind die beiden Fehler aus den Beispielen nach den Figuren 1 und 2 gleichzeitig aufgetreten. Die betroffenen Systemkomponentenmodi stellen eine Superposition (logisch "ODER") der beeinträchtigten Modi aus den Beispielen nach den Figuren 1 und 2 dar und fließen gemeinsam in die Systemdegradation ein. Als Ergebnis des Modusauswahlverfahrens in 5" werden nur der Modus 4 der Systemkomponente 1 (1"), der Modus 2 der Systemkomponente 2 (2") und der Modus 3 der Systemkomponenten n (3") zugelassen.

Wie aus den vorgegangenen Erläuterungen zu erkennen ist, besteht ein wesentlicher Vorteil des erfindungsgemäßen Verfahrens darin, dass es den Umgang mit einer beliebigen Zahl von Systemfehlern und Fehlerkombinationen ermöglicht. Dadurch kann die Funktion und die Sicherheit eines komplexen sicherheitskritischen Systems auch in solchen Fällen aufrecht erhalten werden, die bisher nicht berücksichtigt werden konnten.

Selbst beim gleichzeitigen Auftreten mehrerer Systemfehler werden die Systemfunktionen aufrechterhalten, wobei lediglich eine den Fehlern entsprechende, an die jeweiligen Fehler angepasste Einschränkung des Sicherheitsniveaus oder der Funktionen in Kauf genommen werden muss.

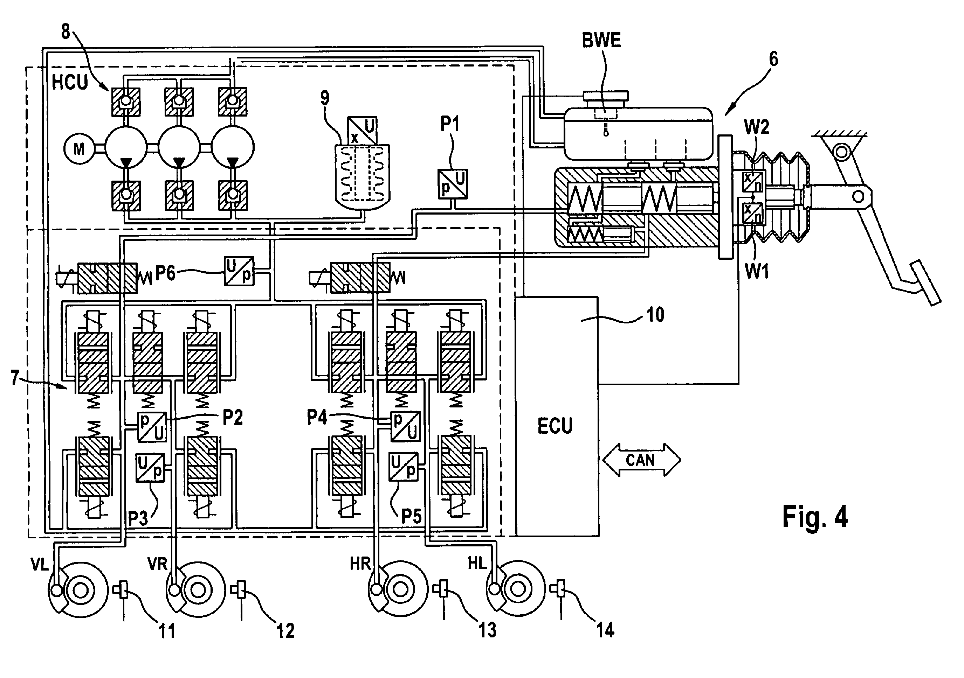

Ein Beispiel für ein komplexes sicherheitskritisches System, bei dem die Erfindung ihren Nutzen beweist, ist das in Fig. 4 wiedergegebene Kraftfahrzeugregelungssystem. Es handelt sich hier um ein Brake-by-Wire-System, speziell um ein geregeltes elektrohydraulisches Bremsensystem (EHB). Dargestellt ist ein Tandem-Hauptzylinder 6, der vor allem zur Realisierung einer hydraulischen Rückfallebene bei Ausfall des eigentlichen Brake-by-Wire-Systems benötigt wird. Der Tandem-Hauptzylinder dient auch zur Simulation eines Pedalweges im "By-Wire-Modus". Die schematisch dargestellten, elektrisch betätigbaren Hydraulikventile 7 in Verbindung mit einer mehrkreisigen Hydraulikpumpe 8 und einem Hydraulikspeicher 9 werden in bekannter Weise zur Erzeugung und Regelung des Bremsdrucks in den einzelnen Radbremsen an den Vorder- und Hinterrädern VL, VR, HL, HR und damit zur Steuerung und Regelung der Bremskraft eingesetzt.

Das Ganze wird durch ein aufwändiges elektronisches Regelungs- und Steuerungssystem, das in einer Elektronik (ECU) 10 untergebracht ist und Eingangsinformationen von diversen Sensoren bezieht, zu einem komplexen sicherheitskritischen Gesamtsystem vervollständigt. Zur Messung und Überwachung der Kolbenbewegungen im Hauptzylinder sind zwei Wegsensoren W1, W2 an der Kolbenstange angeordnet. Mit einem Drucksensor P1 wird der Hauptzylinderdruck und mit weiteren Drucksensoren P2-P5 der Druck in den einzelnen Radbremsen ermittelt. Den Hydraulikdruck, den die Pumpen 8 und der Hydraulikspeicher 9 zur Verfügung stellen, misst ein Drucksensor P6. Zur Ermittlung des Füllstandes des Speichers 9 ist ein weiterer Wegsensor W3 vorhanden. Der Flüssigkeitspegel in einem Druckausgleichsbehälter, der zu dem Hauptzylinder 6 gehört, wird ebenfalls mit Hilfe eines Sensors, der Bestandteil einer Bremsflüssigkeits-Überwachungs-Einrichtung BWE ist, kontolliert. Schließlich sind in Fig. 4 noch Radsensoren 11-14 dargestellt, die vor allem zur Erfassung des Drehverhaltens der einzelnen Räder bei geregelten Bremsvorgängen benötigt werden. Weitere für die Regelung hilfreiche Informationen können über einen CAN-Bus zugeführt und weitergeleitet werden.

Um das erfindungsgemäße Verfahren anwenden zu können, wird ein solches Gesamtsystem, wie das Bremsensystem nach Fig. 4, in Einzelkomponenten, d.h. in Systemkomponenten zerlegt, für die Betriebsmodi definiert werden können. Im vorliegenden Fall werden speziell die den vier Fahrzeugrädern zugeordneten Radbremskraftregler als voneinander unabhängige Systemkomponenten bewertet, denen Betriebsmodi in bestimmter Rangfolge zugeordnet werden. Die Rangfolge der Betriebsmodi reicht von einem Arbeits- oder "Normalmodus", der bei fehlerfreien System optimal ist, über mehrere Notlaufmodi, die je nach Art des aufgetretenen Fehlers noch zulässig sind, bis zu einem "Ausfallmodus".

Bei dem Bremsensystem nach Fig. 4 werden die Betriebsmodi, die für die einzelnen Radbremskraftregler infrage kommen, nach vorgegebener Reihenfolge oder Rangfolge im Hinblick auf das Erreichen hoher oder maximaler Regelgüte (z.B. im Hinblick auf das Erreichen einer maximalen bzw. einer möglichst hohen Verzögerung, einer möglichst hohen Dynamik und/oder Kontrollierbarkeit) priorisiert; dabei wird
- in jedem Berechnungsschritt zunächst davon ausgegangen, dass für jeden der vier Radbremskraftregler alle Betriebsmodi verfügbar sind (Annahme: das System ist fehlerfrei);
- in jedem Berechnungsschritt werden sämtliche Fehlerquellen analysiert; beim Auftreten eines Fehlers werden basierend auf einer Entscheidungsmatrix "Einzelfehler -> 4 Radbremskraft-Betriebsmodi" den betroffenen Radbremskraftreglern alle korrelierten Betriebsmodi aberkannt. Dadurch wird eine systemweite Radbremskraftreglerdegradation erreicht, die auf einer Fehlersuperposition basiert, wobei die Anzahl der aufgetretenen Fehler keine Rolle mehr spielt;
- aus den nach der Fehlerquellenanalyse noch verfügbaren Radbremskraftregler-Betriebsmodi werden grundsätzlich diejenigen Räder und/oder Radpaare ausgewählt und zum Einsatz gebracht, die bestimmten Kriterien genügen, mit dem allgemeinen Ziel,
   o eine möglichst hohe Verzögerung des Fahrzeugs,
   o eine möglichst hohe Dynamik und Kontrollierbarkeit des Bremseneingriffs,
   o ein möglichst giermomentenfreies Bremsen und
   o eine möglichst hohe Stabilität des Fahrzeugs zu erreichen.

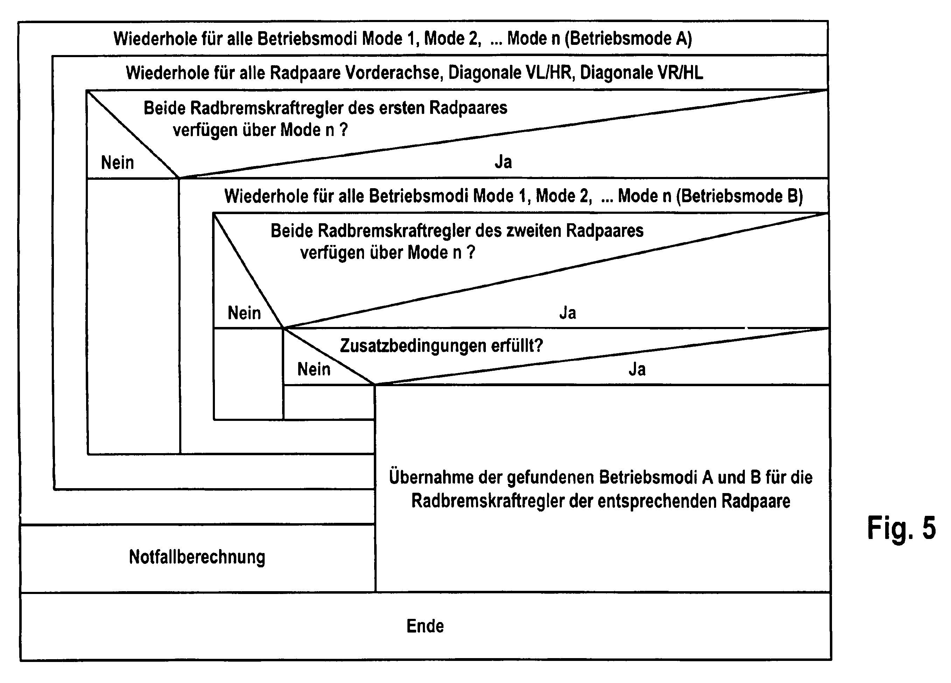

Die Arbeitsweise der Auswahlverfahrens, das auf der Auswahl bestimmter Betriebsmodi für die einzelnen Systemkomponenten beruht und in den Figuren 1-3, 6-8 durch das mit "Modusauswahl" bezeichnete Regelwerk 5, 5', 5" ,21, 21', 21" symbolisiert ist, wird durch das in Fig. 5 dargestellte Flussdiagramm und durch die folgende Beschreibung eines Ausführungsbeispiels der Erfindung, das sich speziell auf ein Kraftfahrzeugregelungssystem - siehe Fig. 4 - bezieht, näher erläutert.

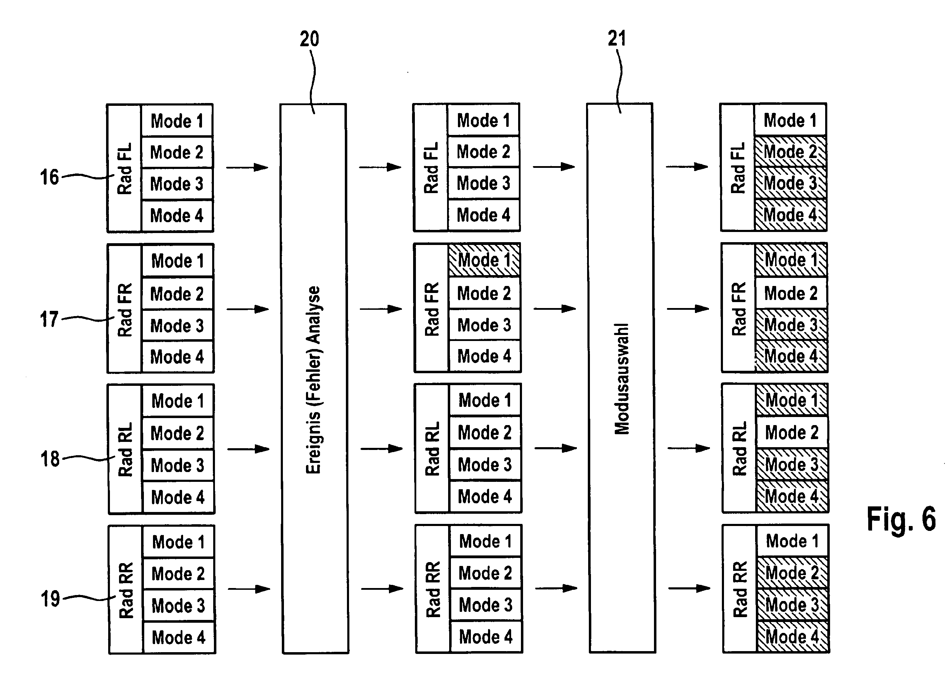

Der in Fig. 5 mit Hilfe eines "Nassi-Shneiderman-Diagramms" dargestellte Ablauf des Modus-Auswahlverfahrens, das durch das Regelwerk 5, 5', 5" ,21, 21', 21" (Figuren 1-3, 6-8) ausgeführt wird, umfasst im Beispiel nach Fig. 4 im wesentlichen die folgenden Schritte:
1. Für die Betriebsmodi der einzelnen Radbremskraftregler (16-19,16'-19',16"-19", siehe Figg.6-8) wird eine feste Rangfolge oder Prioritätsrang im Hinblick auf eine hohe oder maximale Regelgüte, d.h. im Hinblick auf das Erreichen einer maximalen oder einer möglichst hohen Verzögerung des Fahrzeugs und/oder einer möglichst hohen Dynamik und Kontrollierbarkeit des Bremseneingriffs, festgelegt ("Mode 1" bedeutet höchste Priorität, "Mode 2" geringere, ..., "Mode n" niedrigste Priorität.
2. Es wird eine Rangfolge der Radpaare, die immer aus einem rechten und einem linken Rad bestehen, festgelegt, mit dem Ziel einer Bevorzugung ("Priorisierung") des Radpaares, das ein Abbremsen des Fahrzeugs mit möglichst geringen Giermomenten und/oder mit möglichst hoher Stabilität erwarten lässt; das Radpaar "Vorderachse" genießt höchste Priorität, die diagonalen Radpaare sind im Rang gleich, d.h. sie werden mit gleicher Priorität ausgewählt.
3. Es wird das erste Radpaar mit der höchsten Priorität bestimmt, bei dem für die beiden zugehörigen Radbremskraftregler noch ein bestimmter Betriebsmodus A (im ersten Durchlauf ist dies der Betriebsmodus mit der höchsten Priorität) zur Verfügung steht.
4. Anschließend wird nach einem bestimmten Betriebsmodus B (im ersten Durchlauf ist dies der Betriebsmodus mit der höchsten Priorität) gesucht, der dann den beiden Radbremskraftreglern des zweiten Radpaares noch zur Verfügung steht, wobei auch das Radpaar "Hinterachse" herangezogen wird. Es werden die ermittelten Betriebsmodi A und B für alle Radbremskraftreglern übernommen, allerdings nur, wenn bestimmte Zusatzbedingungen (z.B. "nur bestimmte Kombinationen von Betriebsmodi sind gewünscht" oder andere Filterfunktionen, oder "Regelungsfunktion (ABS, ESP etc.) noch verfügbar", "ABS-Funktion noch verfügbar, falls notwendig", etc.) erfüllt sind. Mit dieser Übernahme endet die Berechnung.
5. Konnte in den vorangegangenen Schritten keine dem Regelwerk und den Zusatzbedingungen entsprechende Kombination von Betriebsmodi A und B aller Radbremskraftregler bestimmt werden, so wird Schritt 4 mit den Betriebsmodi B der niedrigeren Priorität (gemäß der vorgegebenen Rangfolge) für die Radbremskraftregler des zweiten Radpaares erneut ausgeführt.
6. Konnte auch nach vollständiger Überprüfung aller zur Verfügung stehenden Betriebsmodi der Radbremskraftregler für das zweite Radpaar keine dem Regelwerk und den Zusatzbedingungen entsprechende Kombination von Betriebsmodi A und B aller Radbremskraftregler gefunden werden, so werden die Schritte 4 und die folgenden mit einem ersten Radpaar geringerer Priorität, für dessen Radbremskraftregler der betrachtete Betriebsmodus A noch zur Verfügung steht, erneut ausgeführt. Es wird beispielsweise an Stelle der Vorderachse eine der Diagonalen ausgewählt.
7. Konnte wiederum nach Durchlauf aller bisherigen Schritte keine Kombination von Betriebsmodi A und B aller Radbremskraftregler gefunden werden, so werden die Schritte 3 und folgende mit einem Betriebsmodus A geringerer Priorität (gemäß der vorgegebenen Rangfolge) erneut ausgeführt.
8. Wurde auch nach vollständiger Überprüfung aller zur Verfügung stehenden Betriebsmodi der Radbremskraftregler aller ersten und zweiten Radpaare immer noch keine dem Regelwerk und den Zusatzbedingungen entsprechende Kombination von Betriebsmodi A und B für alle Radbremskraftregler gefunden, so wird eine Notfallberechnung z.B. in der Art durchgeführt, dass allen Radbremskraftreglern ein fester Notlaufmodus zugewiesen wird oder dass ein Notlaufmodus mittels eines zweiten Regelwerks bestimmt wird.

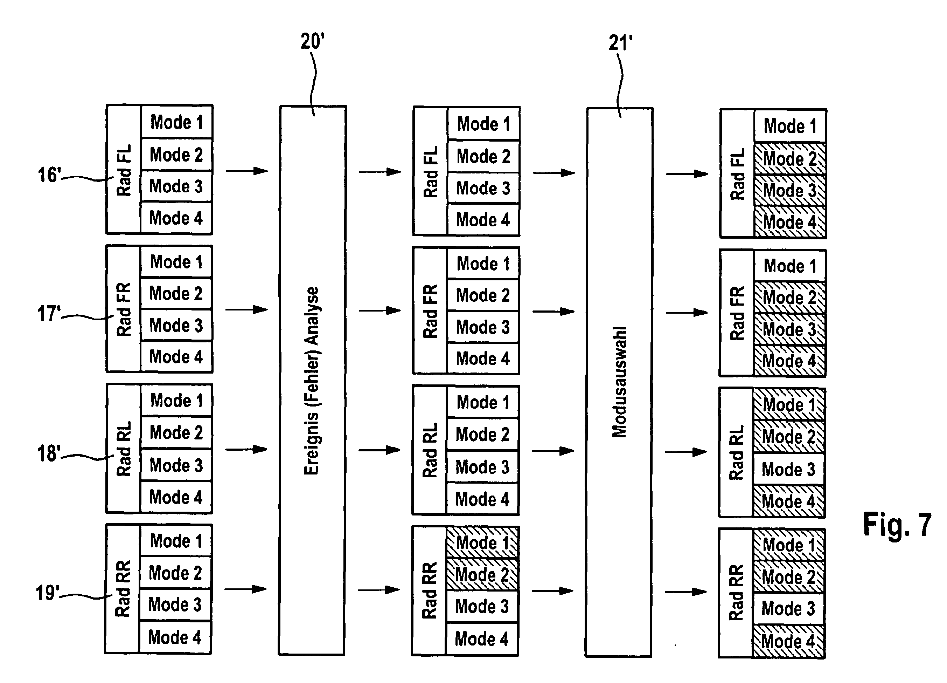

In den Figuren 6 und 7 sind - vergleichbar mit der Darstellung in den Figuren 1-3 und mit den anhand dieser Figuren beschriebenen Beispielen - Systemkomponenten 16-19, 16'-19' dargestellt, deren Betriebsmodi in einem ersten Schritt, nämlich durch eine Fehler- oder Ereignisanalyse 20, 20' bestimmt werden. Bei den Systemkomponenten 16-19, 16'-19' handelt es sich hier um die Radbremskraftregler "Rad FL", "Rad FR", "Rad RL", "Rad RR"; der Radbremskraftregler 16 gehört zu dem linken, der Radbremskraftregler 17 zu dem rechten Vorderrad; der Radbremskraftregler 18 gehört zu dem linken, der Radbremskraftregler 19 zu dem rechten Hinterradrad; entsprechendes gilt für 16'-19'.

Im Beispiel nach Fig. 6 ist ein Fehler aufgetreten, der die Zulässigkeit des Betriebsmodus 1 des Bremskraftreglers 17 verhindert. In dieser Situation lässt ein Bremsen durch Betätigung der Radbremskraftregler 16,19, also der Diagonalen VL-HR, im Betriebsmodus 1 und der anderen Diagonalen VR-HL (Radbremskraftregler 17,18) im Betriebsmodus 2 ein optimales Verhalten des Fahrzeugs erwarten.

In dem Beispiel nach Fig. 7 ist dagegen ein Fehler aufgetreten, der ausschließlich das Zulassen der Betriebsmodi 1 und 2 des Bremskraftreglers 19', der am rechten Hinterrad sitzt, verhindert. In diesem Fall ist es im Hinblick auf das Erreichen einer hohen Regelgüte vorteilhaft, das Fahrzeug mit der Vorderachse, d.h. mit den Radbremskraftreglern 16'und17', im Betriebsmodus 1 und mit der Hinterachse, d.h. mit den Radbremskraftreglern 18' und 19', im Betriebsmodus 3 abzubremsen.

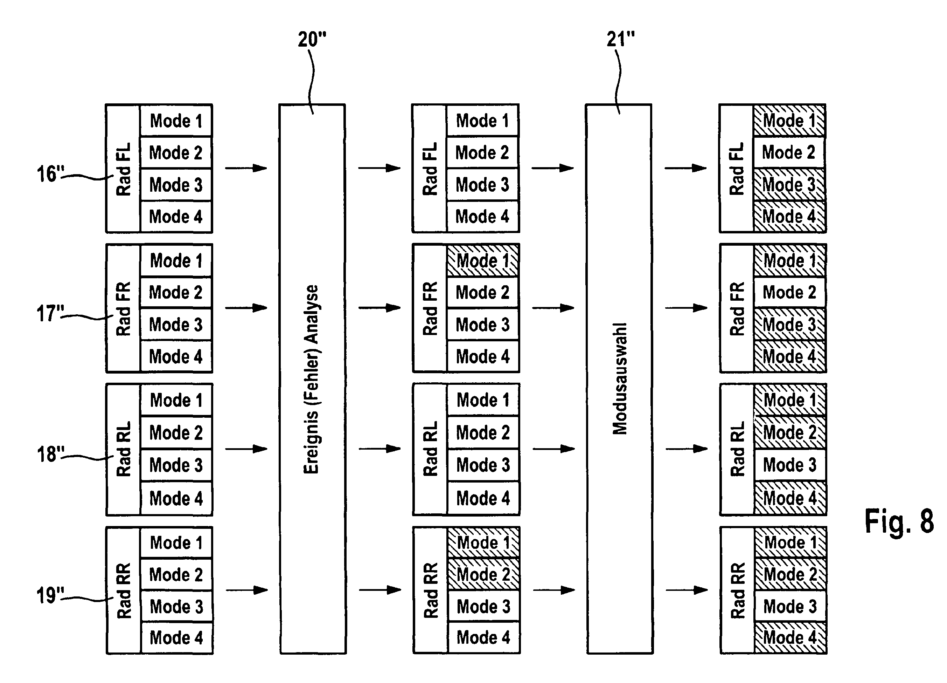

Beide Fehler aus Beispielen nach Fig. 6 und 7 sind im Beispiel nach Fig. 8 gleichzeitig aufgetreten. Die verhinderten Radbremskraftmodi stellen eine Superposition (logisch ODER) der verhinderten Modi aus den obigen Beispielen dar und fließen gemeinsam in die Systemdegradation ein. Die Betriebsmodi 1 und 2 des Bremskraftreglers 19" (hinten-rechts) und der Betriebsmodus 1 des Bremskraftreglers 17" (vorne-rechts) stehen nicht zur Verfügung. Das beste Fahrzeugverhalten bei einem Bremsvorgang wird erreicht, wenn das Fahrzeug mit der Vorderachse (Radbremskraftregler 16", 17") im Betriebsmodus 2 und mit der Hinterachse (Radbremskraftregler 18", 19") im Betriebsmodus 3 bremst.

## Patentansprüche

1. Verfahren zum Sicherstellen oder Aufrechterhalten der Funktion eines komplexen sicherheitskritischen Bremskraftregelungssystems beim Auftreten von Fehlern oder Fehlfunktionen, wobei bei dem Bremskraftregelugnssystem jedem Fahrzeugrad ein Radbremskraftregler zugeordnet ist, wobei
- das Gesamtsystem nach den Erkenntnissen einer Fehlerquellenanalyse (4, 4', 4", 20, 20', 20") in voneinander unabhängige Systemkomponenten (1-3, 16-19, 1'-3', 16'-19', 1"-3", 16"-19") unterteilt wird,
- für die einzelnen Systemkomponenten(1-3, 16-19, 1'-3', 16'-19', 1"-3", 16"-19") Betriebsmodi definiert werden,
- beim Auftreten von Fehlern im Gesamtsystem, unter der Annahme, dass alle Betriebsmodi verfügbar sind, sämtliche Fehlerquellen analysiert und diejenigen Betriebsmodi ermittelt werden, die von den aufgetretenen Fehlern betroffen sind, wobei sämtliche von den aufgetretenen Fehlern betroffenen Betriebsmodi gesperrt werden,
- und auf Basis der von den aufgetretenen Fehlern nicht betroffenen Betriebsmodi nach den Vorgaben des Auswahlsystems (5, 5', 5", 21, 21', 21") die Betriebsmodi der einzelnen Systemkomponenten (1-3, 16-19, 1'-3', 16'-19', 1"-3", 16"-19"), welche die Funktion des Gesamtsystems aufrechterhalten, bestimmt und vorgegeben werden, die in Anbetracht der aufgetretenen Fehler ein optimales oder ein vorgegebenes Verhalten des Gesamtsystems oder zumindest die Aufrechterhaltung der Funktion des Gesamtsystems gewährleisten,
**dadurch gekennzeichnet, dass**
die Radbremskraftregler der einzelnen Räder als voneinander unabhängige Systemkomponenten (16-19,16'-19',16"-19") ausgelegt werden, denen Betriebsmodi in vorgegebener Rangfolge zugeordnet werden, und
dass als Auswahlsystem (21, 21', 21") zur Festlegung der Betriebsmodi der einzelnen Radbremskraftregler in Abhängigkeit von dem Ergebnis der Fehlerquellenanalyse (20, 20', 20") ein Regelwerk verwendet wird, das auf der Bildung und Auswahl von Radpaaren aus jeweils einem rechten und einem linken Fahrzeugrad beruht und wobei
eine Rangfolge der Radpaare, die bei einem Bremsvorgang zum Einsatz kommen, festgelegt wird, wobei dem Radpaar, das beim Bremsen vergleichsweise geringe Giermomente und/oder eine hohe Stabilität des Fahrzeugs erwarten lässt, ein höherer Rang, d.h. eine höhere Priorität bei der Auswahl des Radpaares, das zum Einsatz kommt, eingeräumt wird.

2. Verfahren nach Anspruch 1, **dadurch gekennzeichnet, dass** für die Betriebsmodi der einzelnen Systemkomponenten (1-3, 16-19, 1'-3', 16'-19', 1"-3", 16"-19") eine Rangfolge vorgegeben wird, die von einem Normalmodus oder Arbeitsmodus, der bei fehlerfreiem System vorgegeben wird, bis zu mehreren Notlaufmodi, die je nach Art der aufgetretenen Fehler noch zulässig sind, und einem Ausfallmodus reicht.

3. Verfahren nach Anspruch 1 oder 2, **dadurch gekennzeichnet, dass** das Auswahlsystem (5, 5', 5", 21, 21', 21") in Form einer Entscheidungsmatrix oder eines Regelwerks ausgebildet wird, in der bzw. in dem festgelegt wird, welche Betriebsmodi für die einzelnen Systemkomponenten (1-3, 16-19, 1'-3', 16'-19', 1"-3", 16"-19") in Abhängigkeit von der Art und/oder der Verteilung der Betriebsmodi, die nach Auswertung der Fehlerquellenanalyse (4, 4', 4", 20, 20', 20") noch zulässig sind, vorgegeben werden.

4. Verfahren nach einem oder mehreren der Ansprüche 1 bis 3, **dadurch gekennzeichnet, dass** mindestens zwei Betriebsmodi in vorgegebener Rangfolge den Systemkomponenten (16-19,16'-19',16"-19") zugeordnet werden.

5. Verfahren nach einem oder mehreren der Ansprüche 1 bis 4, **dadurch gekennzeichnet, dass** die Rangfolge der Betriebsmodi der einzelnen Radbremskraftregler (16-19,16'-19',16"-19") im Hinblick auf das Erzielen einer hohen oder maximalen Regelgüte festgelegt wird, wobei grundsätzlich dem Betriebsmodus, der eine höhere Regelgüte erwarten lässt, ein höherer Rang, d.h. eine höhere Priorität bei der Auswahl der Betriebsmodi, die zum Einsatz kommen, eingeräumt wird.

6. Verfahren nach Anspruch 5, **dadurch gekennzeichnet, dass** als Kriterien für eine hohe Regelgüte eine hohe Verzögerung des Fahrzeugs bei gleichzeitig hoher Dynamik und/oder Kontrollierbarkeit des Bremseneingriffs angesehen werden.

7. Verfahren nach einem oder mehreren der Ansprüche 1 bis 6, **dadurch gekennzeichnet, dass** dem Radpaar "Vorderachse" grundsätzlich ein höherer Rang, d.h. eine höhere Priorität bei der Auswahl der Radpaare, die zum Einsatz kommen, als den beiden diagonalen Radpaaren, die im Rang gleich sind, eingeräumt wird.

8. Verfahren nach einem oder mehreren der Ansprüche 4 bis 7, **dadurch gekennzeichnet, dass** bei der Auswahl der Betriebsmodi und der Radpaare, die zum Einsatz kommen, in einem ersten Schritt das ranghöchste Radpaar ermittelt wird, bei dem für die beiden zugehörigen Radbremskraftregler ein bestimmter, vorgegebener Betriebsmodus (A), vorzugsweise der Betriebsmodus mit der höchsten Priorität, zur Verfügung steht.

9. Verfahren nach Anspruch 8, **dadurch gekennzeichnet, dass** in einem zweiten Schritt ein Betriebsmodus (B) ermittelt wird, der den beiden Radbremskraftreglern des zweiten Radpaares noch zur Verfügung steht, wobei der Betriebsmodus mit dem höchsten Rang bevorzugt wird.

10. Verfahren nach Anspruch 8 oder 9, **dadurch gekennzeichnet, dass** die in dem ersten und in dem zweiten Schritt ausgewählten Betriebsmodi den einzelnen Radbremskraftregler zugeordnet werden, jedoch nur dann, wenn bestimmte, vorgegebene Zusatzbedingungen, erfüllt sind.

11. Verfahren nach Anspruch 10, **dadurch gekennzeichnet, dass** die Zusatzbedingungen, die vor der Zuordnung der ausgewählten Betriebsmodi auf Erfüllung überprüft werden, z.B. die Zulässigkeit der Kombination bestimmter Betriebsmodi, die Verfügbarkeit von Regelungsfunktionen etc. beschreiben.

12. Verfahren nach Anspruch 10 oder 11, **dadurch gekennzeichnet, dass** bei Nichterfüllung der Zusatzbedingungen die Auswahl von Betriebsmodi und/oder von Radpaaren, die zum Einsatz kommen, auf Basis von Betriebsmodi und/oder Radpaaren geringeren Ranges wiederholt wird, bis eine Kombination von Betriebsmodi ermittelt wird, für die die Zusatzbedingungen erfüllt sind.

13. Verfahren nach Anspruch 12, **dadurch gekennzeichnet, dass** nach einer Auswahl von Betriebsmodi für die einzelnen Radbremskraftregler bei Nichterfüllung der vorgegebenen Zusatzbedingungen die Bestimmung der Betriebsmodi des zweiten Radpaares auf Basis von Betriebsmodi niedrigeren Ranges wiederholt und ein erneuter Abgleich mit den Zusatzbedingungen durchgeführt wird.

14. Verfahren nach Anspruch 13, **dadurch gekennzeichnet, dass** bei Nichterfüllung der Zusatzbedingungen die Auswahl von Betriebsmodi und von Radpaaren auf Basis von Radpaaren niedrigeren Ranges wiederholt wird.

15. Verfahren nach einem oder mehreren der Ansprüche 10 bis 14, **dadurch gekennzeichnet, dass** nach wiederholter Auswahl und Zuordnung von Betriebsmodi und/oder Radpaaren sowie Kombination der zur Verfügung stehenden Betriebsmodi bei andauernder Nichterfüllung der Zusatzbedingungen eine Notfallberechnung und Festlegung der Betriebsmodi durchgeführt wird.

## Claims

1. Method for ensuring or maintaining the functioning of a complex safety-critical braking force control system when faults or malfunctions occur, wherein in the braking force control system each vehicle wheel is assigned a wheel braking force controller, wherein
- the integral system is divided into independent system components (1-3, 16-19, 1'-3', 16'-19', 1"-3", 16"-19") according to the findings of a fault source analysis (4, 4', 4", 20, 20', 20"),
- operating modes are defined for the individual system components (1-3, 16-19, 1'-3', 16'-19', 1"-3", 16"-19"),
- when faults occur in the integral system, assuming that all the operating modes are available, all the fault sources are analyzed and those operating modes which are affected by the faults which have occurred are determined, wherein all the operating modes which are affected by the faults which have occurred are blocked,
- and, on the basis of the operating modes not affected by the faults which have occurred, according to the prescriptions of the selection system (5, 5', 5", 21, 21', 21") those operating modes of the individual system components (1-3, 16-19, 1'-3', 16'-19', 1"-3", 16"-19") which maintain the functioning of the integral system which, in respect to the faults which have occurred, ensure optimum or predefined behaviour of the integral system or at least ensure that the functioning of the integral system is maintained, are determined and predefined,
**characterized in that**
the wheel braking force controllers of the individual wheels are configured as independent system components (16-19, 16'-19', 16"-19") to which operating modes are assigned in a predefined sequence, and
**in that** a control unit which is based on the formation and selection of wheel pairs from, in each case, a right-hand and a left-hand vehicle wheel, is used as selection system (21, 21', 21") for defining the operating modes of the individual wheel braking force controllers as function of the result of the fault source analysis (20, 20', 20"), and wherein
a sequence of the wheel pairs which are used during a braking process is defined, wherein the wheel pair which permits comparatively small yaw torque and/or a high level of stability of the vehicle to be expected during braking is assigned a higher ranking, i.e. a higher priority during the selection of the wheel pair which is used.

2. Method according to Claim 1, **characterized in that**, for the operating modes of the independent system components (1-3, 16-19, 1'-3', 16'-19', 1"-3", 16"-19") a sequence is predefined which extends from a normal mode or working mode, which is predefined when the system is fault free, up to a plurality of emergency operating modes, which are still permissible depending on the type of faults which have occurred, and a failure mode.

3. Method according to Claim 1 or 2, **characterized in that** the selection system (5, 5', 5", 21, 21', 21") is embodied in the form of a decision matrix or a control unit in which it is defined which operating modes for the individual system components (1-3, 16-19, 1'-3', 16'-19', 1"-3", 16"-19") are predefined as a function of the type and/or the distribution of the operating modes which are still permissible after evaluation of the fault source analysis (4, 4', 4", 20, 20', 20").

4. Method according to one of more of Claims 1 to 3, **characterized in that** at least two operating modes are assigned to the system components (16-19, 16'-19', 16"-19") in a predefined sequence.

5. Method according to one of more of Claims 1 to 4, **characterized in that** the sequence of the operating modes of the individual wheel braking force controllers (16-19, 16'-19', 16"-19") is defined with respect to the achievement of a high or maximum control quality, wherein the operating mode which permits a relatively high control quality to be expected is basically assigned a relatively high ranking, i.e. a relatively high priority, during the selection of the operating modes which are used.

6. Method according to Claim 5, **characterized in that** a strong deceleration of the vehicle with a simultaneously high dynamic value and/or controllability of the braking intervention are/is considered to be criteria/a criterion for a high control quality.

7. Method according to one of more of Claims 1 to 6, **characterized in that** the "front axle" wheel pair is basically assigned a relatively high ranking, i.e. a relatively high priority during the selection of the wheel pairs which are used than is assigned to the two diagonal wheel pairs which are equal in ranking.

8. Method according to one of more of Claims 4 to 7, **characterized in that** during the selection of the operating modes and of wheel pairs which are used, in a first step the wheel pair which has the highest ranking and with which a specific, predefined operating mode (A), preferably the operating mode with the highest priority, is available for the two associated wheel braking force controllers, is determined.

9. Method according to Claim 8, **characterized in that** in a second step an operating mode (B) which is still available to the two wheel braking force controllers of the second wheel pair is determined, wherein the operating mode with the highest ranking is preferred.

10. Method according to Claim 8 or 9, **characterized in that** the operating modes which are selected in the first and in the second step are assigned to the individual wheel braking force controller, but only when specific, predefined additional conditions are met.

11. Method according to Claim 10, **characterized in that** the additional conditions, which are checked for fulfilment before the assignment of the selected operating modes, describe, for example, the permissibility of the combination of certain operating modes, the availability of control functions etc.

12. Method according to Claim 10 or 11, **characterized in that** when the additional conditions are not fulfilled, the selection of operating modes and/or of wheel pairs which are used is repeated on the basis of operating modes and/or wheel pairs of a relatively low ranking until a combination of operating modes for which the additional conditions are fulfilled is determined.

13. Method according to Claim 12, **characterized in that** after a selection of operating modes for the individual wheel braking force controllers, when the predefined additional conditions are not fulfilled, the determination of the operating modes of the second wheel pair is repeated on the basis of operating modes of a relatively low ranking, and a renewed equalization is carried out with the additional conditions.

14. Method according to Claim 13, **characterized in that** when the additional conditions are not fulfilled, the selection of operating modes and of wheel pairs is repeated on the basis of wheel pairs of a relatively low ranking.

15. Method according to one of more of Claims 10 to 14, **characterized in that** after the repeated selection and assignment of operating modes and/or wheel pairs and combination of the available operating modes when the additional conditions are not fulfilled continuously, an emergency calculation and definition of the operating modes are carried out.

## Revendications

1. Procédé permettant de garantir ou de conserver le fonctionnement d'un système de régulation de force de freinage complexe et critique pour la sécurité en présence d'anomalies ou de dysfonctionnements, un système de régulation de force de freinage de roue étant associé à chaque roue de véhicule dans ledit système de régulation de force de freinage,
- le système global étant subdivisé en composants du système (1-3, 16-19, 1'-3', 16'-19', 1"-3", 16"-19") indépendants les uns des autres après identification d'une analyse de source d'anomalie (4, 4', 4", 20, 20', 20") ;
- des modes de fonctionnement étant définis pour les composants du système (1-3, 16-19, 1'-3', 16'-19', 1"-3", 16"-19") individuels ;
- l'ensemble des sources d'anomalie étant analysé et les modes de fonctionnement concernés par les anomalies survenues étant déterminés en présence d'anomalies dans le système global, en présumant que tous les modes de fonctionnement sont disponibles, avant de bloquer l'ensemble des modes de fonctionnement concernés par les anomalies survenues ; et
- les modes de fonctionnement des composants du système (1-3, 16-19, 1'-3', 16'-19', 1"-3", 16"-19") individuels préservant le fonctionnement du système global étant déterminés et prédéfinis d'après les instructions préalables du système de sélection (5, 5', 5", 21, 21', 21") sur la base des modes de fonctionnement non concernés par les anomalies survenues, lesdits modes de fonctionnement garantissant un comportement optimal ou prédéfini du système global ou au moins le maintien du fonctionnement du système global au vue de l'anomalie survenue ;
**caractérisé en ce que** :
les systèmes de régulation de force de freinage de roue des roues individuelles sont conçus comme des composants du système (16-19, 16'-19', 16"-19") indépendants les uns des autres associés aux modes de fonctionnement suivant un ordre prédéfini ; et
un élément de régulation reposant sur la formation et la sélection de paires de roues à partir respectivement d'une roue de véhicule droite et d'une roue de véhicule gauche est utilisé comme système de sélection (21, 21', 21") pour déterminer les modes de fonctionnement des systèmes de régulation de force de freinage de roue individuels en fonction du résultat de l'analyse de source d'anomalie (20, 20', 20") ;
un ordre des paires de roues utilisées lors d'un processus de freinage est déterminé, un rang plus élevé, c'est-à-dire une priorité plus élevée, étant accordés, lors de la sélection de la paire de roues utilisée, à la paire de roues permettant d'attendre des couples de lacet comparativement réduits lors du freinage et/ou une stabilité élevée du véhicule.

2. Procédé selon la revendication 1, **caractérisé en ce qu'**un ordre est prédéfini pour les modes de fonctionnement des composants du système (1-3, 16-19, 1'-3', 16'-19', 1"-3", 16"-19") individuels, ledit ordre allant d'un mode normal ou mode de travail utilisé en présence d'un système fonctionnant sans anomalie à un mode d'arrêt en passant par plusieurs modes d'urgence encore respectivement autorisés en fonction des anomalies survenues.

3. Procédé selon la revendication 1 ou 2, **caractérisé en ce que** le système de sélection (5, 5', 5", 21, 21', 21") prend la forme d'une matrice de prise de décision ou d'un élément de régulation dans laquelle et/ou dans lequel on détermine quels modes de fonctionnement sont prédéfinis pour les composants du système (1-3, 16-19, 1'-3', 16'-19', 1"-3", 16"-19") individuels en fonction du type et/ou de la répartition des modes de fonctionnement encore autorisés après évaluation de l'analyse de source d'anomalie (4, 4', 4", 20, 20' , 20").

4. Procédé selon l'une quelconque des revendications 1 à 3 ou plusieurs d'entre elles, **caractérisé en ce qu'**au moins deux modes de fonctionnement sont associés aux composants du système (16-19, 16'-19', 16"-19") selon un ordre prédéfini.

5. Procédé selon l'une quelconque des revendications 1 à 4 ou plusieurs d'entre elles, **caractérisé en ce que** l'ordre des modes de fonctionnement des systèmes de régulation de force de freinage de roue (16-19, 16'-19', 16"-19") individuels est déterminé pour permettre d'atteindre une validité de règle élevée ou maximale, un rang plus élevé, c'est-à-dire une priorité plus élevée, étant accordée en principe au mode de fonctionnement permettant d'atteindre une validité de règle plus élevée, lors de la sélection des modes de fonctionnement utilisés.

6. Procédé selon la revendication 5, **caractérisé en ce que** les critères de validité de règle élevée étant un ralentissement important du véhicule avec une dynamique et/ou une capacité de contrôle simultanément élevée de l'opération de freinage.

7. Procédé selon l'une quelconque des revendications 1 à 6 ou plusieurs d'entre elles, **caractérisé en ce qu'**un rang plus élevé, c'est-à-dire une priorité plus élevée, est en principe accordé à la paire de roues « essieu avant » lors de la sélection des paires de roues utilisées en présence de deux paires de roues diagonales de rang égal.

8. Procédé selon l'une quelconque des revendications 4 à 7 ou plusieurs d'entre elles, **caractérisé en ce qu'**en cas de sélection des modes de fonctionnement et des paires de roues utilisées, on détermine lors d'une première étape la paire de roues au rang le plus élevé pour laquelle un mode de fonctionnement (A) déterminé prédéfini, de préférence le mode de fonctionnement présentant la priorité la plus élevée, est à disposition pour les deux systèmes de régulation de force de freinage de roue associés.

9. Procédé selon la revendication 8, **caractérisé en ce que** lors d'une deuxième étape, on détermine un mode de fonctionnement (B) encore à disposition des deux systèmes de régulation de force de freinage de roue de la deuxième paire de roues, le mode de fonctionnement présentant le rang le plus élevé étant préféré.

10. Procédé selon la revendication 8 ou 9, **caractérisé en ce que** les modes de fonctionnement sélectionnés lors de la première et de la deuxième étape sont associés aux systèmes de régulation de force de freinage de roue individuels, toutefois seulement lorsque des conditions supplémentaires déterminées prédéfinies sont remplies.

11. Procédé selon la revendication 10, **caractérisé en ce que** les conditions supplémentaires contrôlées avant l'association des modes de fonctionnement sélectionnés pour vérifier qu'elles sont bien remplies décrivent par exemple la recevabilité de la combinaison de modes de fonctionnement définis, la disponibilité des fonctions de régulation, etc.

12. Procédé selon la revendication 10 ou 11, **caractérisé en ce que** lorsque les conditions supplémentaires ne sont pas remplies, la sélection des modes de fonctionnement et/ou des paires de roues utilisées est répétée sur la base des modes de fonctionnement et/ou des paires de roues de rang inférieur jusqu'à déterminer une combinaison de modes de fonctionnement permettant de remplir les conditions supplémentaires.

13. Procédé selon la revendication 12, **caractérisé en ce qu'**après la sélection des modes de fonctionnement pour les systèmes de régulation de force de freinage de roue individuels lorsque les conditions supplémentaires prédéfinies ne sont pas remplies, on répète la détermination des modes de fonctionnement de la deuxième paire de roues sur la base des modes de fonctionnement de rang inférieur et on réalise une nouvelle compensation sur la base des conditions supplémentaires.

14. Procédé selon la revendication 13, **caractérisé en ce que** lorsque les conditions supplémentaires ne sont pas remplies, la sélection des modes de fonctionnement et des paires de roues est répétée sur la base des paires de roues de rang inférieur.

15. Procédé selon l'une quelconque des revendications 10 à 14 ou plusieurs d'entre elles, **caractérisé en ce qu'**après la répétition de la sélection et de l'association des modes de fonctionnement et/ou des paires de roues ainsi qu'après la combinaison des modes de fonctionnement mis à disposition lorsque les conditions supplémentaires ne sont pas remplies de façon durable, on effectue un calcul d'urgence et on détermine les modes de fonctionnement à utiliser.
